# EUROPEAN PATENT APPLICATION

(11) **EP 3 786 740 A1**
(43) Date of publication of application: **03.03.2021**
(21) Application number: 19194082.4
(22) Date of filing: 28.08.2019
(51) Int. Cl.: G05B 19/418

(54) **SYSTEM AND METHOD FOR MANAGING DIGITAL TWIN OF AN ASSET**

(71) Applicant: Siemens Aktiengesellschaft, 80333 München (DE)
(72) Inventor: WAHL, Alexander, 90530 Wendelstein (DE)
(74) Representative: Isarpatent

(57) **Abstract**

The present invention provides a method and system for managing digital twin of assets in a cloud computing environment. In one embodiment, a method comprises generating a digital twin associated with an asset based on a set of data values associated with the asset. The digital twin is a real-time digital representation of the asset. The method comprises validating the digital twin associated with the asset based on a set of validation rules and provisioning the validated digital twin of the asset to a tenant of the cloud computing system.

## Description

The present invention relates to the field of cloud computing system, and more particularly relates to system and method for managing digital twin of an asset.

With advent of cloud computing technology, more and more assets (e.g., industrial equipment, healthcare equipment, building automation devices, mobility, energy generation and distribution devices, etc.) are connected to a cloud computing system, wherein the assets continuously send data to the cloud computing system in real-time. The cloud computing system analyzes the data of the asset. The cloud computing system is becoming smarter and smarter day by day in terms of analyzing the data of assets in real-time to manage the asset. Concepts such as digital twin which represents an asset in virtual world but in real-time environment are implemented using cloud computing system. The digital twin of the assets is capable of simulating a behavior of the asset and give insights about condition of asset, performance of asset, etc. This may help field operator or maintenance personal to carry out preventive maintenance activities, thereby improving the productivity and reducing the downtime. Similarly, the digital twin can be used for designing the asset, manufacturing the asset, commissioning the asset, etc.

With large number of assets connected to the cloud computing system, large number of digital twins are stored in the cloud computing system. However, currently known cloud computing systems does not provide a cloud computing platform which can manage digital twin of the assets throughout its lifecycle (e.g., designing, manufacturing, commissioning, controlling, maintaining, etc.).

In light of the above, there is a need for a method and system for managing digital twin of an asset using a cloud computing system.

Therefore, it is the object of the present invention to provide a method and system for managing digital twin of an asset via a cloud computing.

The object of the present invention is achieved by a method of managing digital twins of assets using a cloud computing system. The method comprises generating a digital twin associated with an asset based on a set of data values associated with the asset. The digital twin, also known as virtual replica, is a real-time digital representation of the asset. The set of data values comprises set of design and engineering values associated with the asset. The method comprises validating the digital twin associated with the asset based on a set of validation rules, and provisioning the validated digital twin of the asset to a tenant of the cloud computing system.

In one preferred embodiment, the method may comprises generating a unique signature associated with the digital twin upon successful validation of the digital twin of the asset. The unique signature may be unique identifier assigned to the digital twin. The unique identifier may be a private hash key. The private hash key may secure the digital twin from unauthorized access.

In another preferred embodiment, the method may comprise storing the digital twin of the asset in a digital twin database in a blockchain format.

In yet another preferred embodiment, the method may comprise retrieving at least one digital twin of the asset from the digital twin database, and configuring the digital twin of the asset using real-time data associated with the asset. The real-time data may include real-time operation and performance parameter values associated with the asset. The real-time data may be time series data received from one or more sensors connected to the asset.

In further another preferred embodiment, the method may comprise generating a simulation model associated with the asset. The simulation model may be generated using one or more mathematical models which is capable of simulating behavior of the asset during real-time operation.

In still another preferred embodiment, the method may comprise creating a simulation instance associated with the asset using the simulation model associated with the asset and the configured digital twin of the asset. The simulation instance may define a simulation environment associated with the asset. The simulation instance is generated by configuring the simulation model using the configured digital twin of the asset.

In yet another preferred embodiment, the method may comprise simulating designing of the asset by executing the simulation instance associated with the asset. In one exemplary implementation, the method may comprise simulating engineering of the asset by executing the simulation instance associated with the asset. In another exemplary implementation, the method may comprise simulating commissioning process of the asset in a technical installation by executing the simulation instance associated with the asset. In yet another exemplary implementation, the method may comprise simulating operation of the asset by executing the simulation instance associated with the asset. In further another exemplary implementation, the method may comprise simulating maintenance operation associated with maintenance of the asset by executing the simulation instance associated with the asset. In still another exemplary implementation, the method may comprise simulating a manufacturing process associated with manufacturing of the asset by executing the simulation instance associated with the asset.

In further another preferred embodiment, the method may comprise generating simulation results associated with the asset.

In still another preferred embodiment, the method may comprise analyzing the simulation results associated with the asset, determining anomalies associated with the asset based on the analysis of the simulation results, and generating one or more recommendations to resolve the anomalies associated with the asset.

In yet another preferred embodiment, the method may comprise generating an assembly of digital twins associated with a plurality of assets in a technical installation using digital twins stored in the digital twin database. For example, the digital twin assembly may be virtual representation of entire plant comprising plurality of assets. The digital twins of assets are connected via a digital thread. The digital thread between to digital twin define connections between the two assets connected in a similar fashion in the physical world.

The object of the present invention is achieved by a cloud computing system comprising one or more processing units, and an accessible memory unit communicatively coupled to the one or more processing units. The memory unit comprises a digital twin management module configured for performing method mentioned above.

The object of the present invention is also achieved by a non-transitory computer-readable storage medium having instructions stored therein, that when executed by one or more processing units, cause the one or more processing units to perform method mentioned above.

The above-mentioned and other features of the present invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a schematic representation of a cloud computing environment, according to an embodiment of the present invention;
- FIG 2: is a block diagram of a digital twin management module such as those shown in FIG 1, according to an embodiment of the present invention;
- FIG 3: is a block diagram of a simulation module such as those shown in FIG 2, according to an embodiment of the present invention;
- FIG 4: illustrates a process flow diagram of an exemplary method of managing a digital twin of an asset using a cloud computing platform, according to an embodiment of the present invention;
- FIG 5: illustrates a process flowchart of an exemplary method of simulating the asset based on the digital twin of the asset using the cloud computing platform, according to an embodiment of the present invention;
- FIG 6: is a schematic representation depicting journey of a digital twin throughout lifecycle of an asset; and
- FIG 7: is a schematic representation of the cloud computing system such as those shown in FIG 1, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

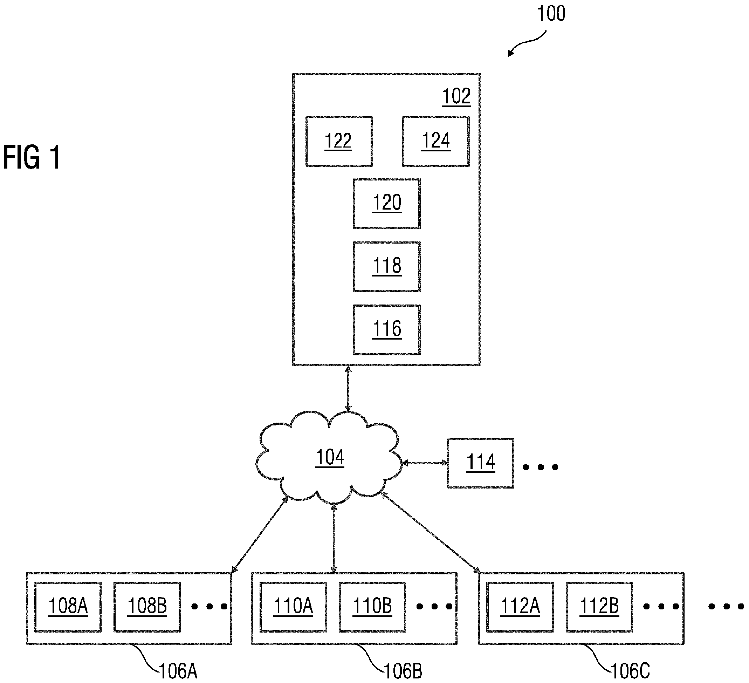

FIG 1 is a schematic representation of a cloud computing environment 100, according to an embodiment of the present invention. Particularly, FIG 1 depicts the cloud computing system 102 which is capable of providing cloud services for managing an industrial plant 106 comprising assets 108A-N. The cloud computing system 102 is connected to assets 108A-N, assets 110A-N, assets 112A-N in the technical installation (e.g., industrial plant) 106A-N via a network 104 (e.g., Internet). The assets 108A-N, 110A-N, and 112A-N may include servers, robots, switches, automation devices, motors, valves, pumps, actuators, sensors and other industrial equipments. According to the present invention, the cloud services may include generating digital twins of the assets 108A-N, 110A-N, and 112A-N or industrial plants 106A-N, configuring digital twins, simulating behavior of the assets 108A-N, 110A-N, and 112A-N or industrial plants 106A-N, analyzing simulation results, and visualizing the analyzed simulation results, etc. The cloud service may enable to design, engineer, manufacture, commission, control, maintain the assets 108A-N, 110A-N, and 112A-N or industrial plants 106AN.

The cloud computing system 102 is also connected to user devices 114 via the network 104. The user devices 114 can access the cloud computing system 102 for generating and configuring digital twins, creating simulation models, executing simulation instances, analyzing simulation results, and visualizing simulation results.

The cloud computing system 102 comprises a cloud interface 116, cloud hardware and OS 118, a cloud computing platform 120, a digital twin management module 122, and a digital twin database 124. The cloud interface 116 enables communication between the cloud computing platform 120 and the industrial plants 106A-N. Also, the cloud interface 116 enables communication between the cloud computing platform 120 and the user devices 114.

The cloud hardware and OS 118 may include one or more servers on which an operating system is installed and comprising one or more processing units, one or more storage devices for storing data, and other peripherals required for providing cloud computing functionality. The cloud computing platform 120 is a platform which implements functionalities such as data storage, data analysis, data visualization, data communication on the cloud hardware and OS 118 via APIs and algorithms; and delivers the aforementioned cloud services by executing the digital twin management module 122. In other words, the cloud computing platform 120 employs the digital twin management module 122 for managing digital twins of the assets 108A-N, 110A-N, and 112A-N or industrial plants 106A-N throughout its lifecycle. The cloud computing platform may comprise a combination of dedicated hardware and software built on top of the cloud hardware and OS 118.

The digital twin management module 122 is stored in the form of machine-readable instructions and executable by the cloud computing platform 120. The digital twin management module 122 is configured to manage digital twins of assets 108A-N, 110A-N, and 112A-N and/or industrial plants 106A-N throughout the lifecycle of the assets 108A-N, 110A-N, and 112A-N and/or industrial plants 106A-N. For example, the digital twin management module 122 may include generating digital twins, providing secure access to digital twins to authorized tenants based on requirement, generating simulation models, creating simulation instances using the simulation models and the digital twins, simulating various stages of lifecycle of the assets 108A-N, 110A-N, and 112A-N or industrial plants 106A-N using the simulation instances, analyzing and visualizing simulation results, etc. Advantageously, tenants can generate and seamlessly access digital twins associated with their assets 108A-N, 110A-N, and 112A-N or industrial plants 106A-N at any time during the lifecycle of the assets 108A-N, 110A-N, and 112A-N or industrial plants 106A-N using the cloud computing system 102 in secured manner. The tenants can seamlessly simulate behavior of the assets 108A-N, 110A-N, and 112A-N or industrial plants 106A-N using the digital twins. Advantageously, the tenants can identify and address problems earlier that may occur in real-time. This may lead to reduction in time from design-to-market, and plant downtime, reduction in maintenance cost, and increase in output.

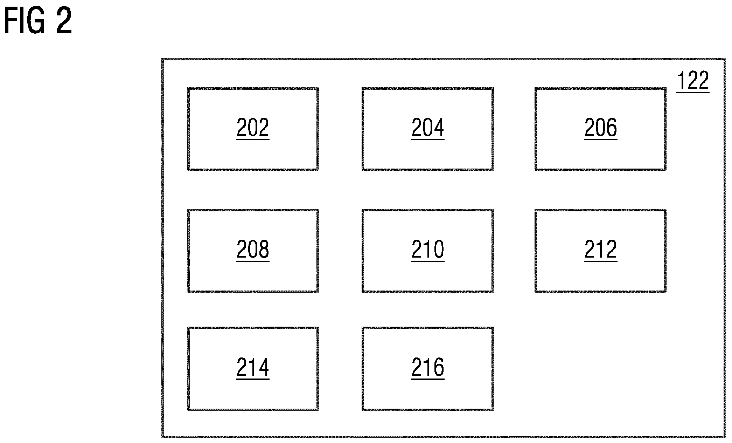

FIG 2 is a block diagram of the digital twin management module 122 such as those shown in FIG 1, according to an embodiment of the present invention. The digital twin management module 122 comprises a digital twin generation module 202, a digital twin validation module 204, a signature generation module 206, a digital twin provisioning module 208, a digital twin retrieval module 210, a digital twin configuration module 212, a simulation model generation module 214, and a simulation module 216.

The digital twin generation module 202 is configured to provide an integrated development environment (IDE) for a designer (e.g., engineering consultant, original equipment manufacturer, plant operator, etc.) generating digital twin of an asset (e.g., the asset 108A). In one embodiment, the digital twin generation module 202 is configured to generate the digital twin of the asset 108A using digital twins of similar assets available in the digital twin database 124. Advantageously, the cloud computing system 102 provides access to various digital twins stored in the digital twin database 124. In yet another embodiment, the digital twin generation module 202 generates the digital twin of the asset 108A using geometric models of the asset 108A. In yet another embodiment, the digital twin generation module 202 is configured to generate an assembly of digital twins of different components that form an entire technical installation such as industrial set up. In further another embodiment, the digital twin generation module 202 is configured to generate digital twin of the asset 108A based on lifecycle stage of the asset 108A (e.g., design, engineering, manufacturing, commissioning, operation, maintenance, etc.).

The digital twin validation module 204 is configured to validate digital twin of the asset 108A based on a set of validation rules. The signature generation module 206 is configured to generate unique signature of the digital twin of the asset 108A upon successful validation of the digital twin of the asset 108A. The unique signature may include validation timestamp, unique identifier of the digital twin and the unique identifier of the asset 108A. The digital twin provision module 208 is configured to provision the digital twin of the asset 108A to one or more tenants of the cloud computing system 102. Accordingly, one or more tenants can access the digital twin of the asset 108A using the cloud computing system 102. The one or more tenants can also assign access to the digital twin of the asset 108A to one or more subtenants. For example, the tenant can be original equipment manufacturer of the asset 108A whereas the subtenant can be user of the asset 108A.

The digital twin retrieval module 210 is configured to retrieve digital twin of the asset 108A based on a request from the tenant to simulate behavior of asset 108A. In one embodiment, the digital twin is retrieved based on the unique identifier of the asset 108. The digital twin configuration module 212 is configured to configure the digital twin of the asset 108A using real-time data associated with the asset 108A. The digital twin configuration module 212 is configured to configure the digital twin of the asset 108A using historical data (e.g., operation data, performance data, maintenance data, etc.) of the asset 108A.

The simulation model generation module 214 is configured to generate a simulation model of the asset 108A. The simulation model is capable of simulating asset in a simulation environment. In one embodiment, the simulation model generation module 214 is configured to generate a simulation model of the asset 108A using similar simulation models stored in the digital twin database 124. The another embodiment, the simulation model generation module 214 is configured to generate a simulation model of the asset 108A using simulation data from other tools such as computer-aided design tools, finite element analysis tools, and computational fluid dynamics tools.

The simulation module 216 is configured to simulate behavior of the asset 108A using the digital twin of the asset 108A and the simulation model of the asset 108A. The simulation module 216 is configured to determine anomalies in the behavior of the asset 108A. According to the present invention, the simulation module 216 is configured to remotely simulate an asset or a group of assets from design stage to end of life of the asset (s) and provide insights to the tenant. Advantageously, the tenant can use digital twin to simulate a portion of whole of technical installation using the cloud computing system 102 anytime throughout the lifecycle of the technical installation prior to performing actions on the ground (e.g., designing, engineering, commissioning, operation, maintenance, etc.). Also, several players (e.g., designer, original equipment manufacturer, system integrator, plant operator, field engineer, etc.) can have secured access to the digital twin of the asset(s) and simulation model(s) via the cloud computing system 102.

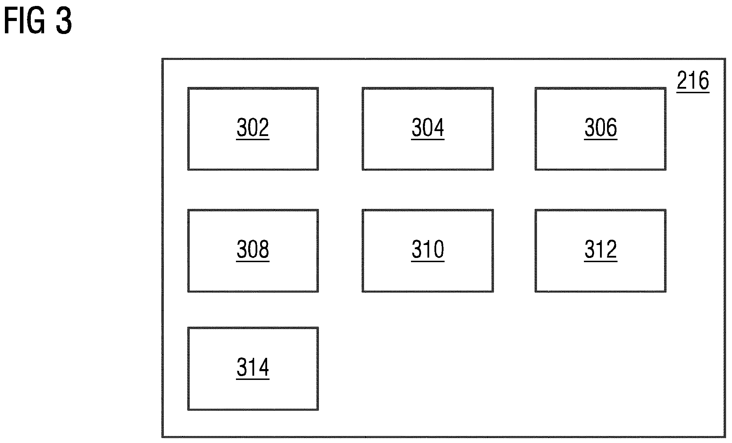

The different components of the simulation module 216 is explained in the description of FIG 3.

FIG 3 is a block diagram of the simulation module 216 such as those shown in FIG 2, according to an embodiment of the present invention. Particularly, the simulation module 216 comprises a simulation instance creation module 302, a simulation instance execution module 304, a simulation result generation module 306, a simulation result analysis module 308, an anomaly detection module 310, a recommendation generation module 312, and a visualization module 314.

The simulation instance creation module 302 is configured to create a simulation instance associated with the asset 108A using the simulation model of the asset 108A and the digital twin of the asset 108A. The simulation instance execution module 304 is configured to execute the simulation instance of the asset 108A on the cloud computing system 102. Execution of the simulation instance of the asset 108A results in simulation of behavior of the asset 108A in real-time.

The simulation result generation module 306 is configured to generate simulation results at the end of the execution of the simulation instance of the asset 108A. The simulation results may indicate the behavior of the asset 108A during simulation of the asset 108A. The simulation result analysis module 308 is configured to analyze the simulation results associated with the asset 108A. In other words, the simulation result analysis module 308 is configured to analyze the behavior of the asset 108A and compare the analyzed behavior with expected behavior of the asset 108A during a specific lifecycle stage of the asset 108A. The anomaly detection module 310 is configured to detect anomaly associated with the behavior of the asset 108A based on the outcome of analysis of the simulation results. The anomaly detection module 312 is configured to generate one or more recommendations to prevent anomaly from occurring. The recommendations may include actions related to preventive maintenance, change in design parameters, change in specific engineering parameters, change in specific commissioning parameters, change in specific operational parameters, etc. The visualization module 314 is configured for generating visualizations associated with simulation of the asset 108A including but not limited to simulation results, anomaly in the simulation results, recommendations to address anomalies, etc.

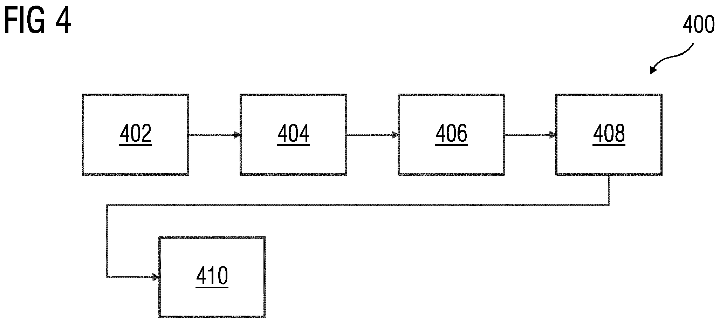

FIG 4 illustrates a process flow diagram 400 of an exemplary method of managing digital twin of an asset using a cloud computing platform 120, according to an embodiment of the present invention. At step 402, a digital twin of an asset (e.g., a motor) is generated based on a set of data values associated with the asset. For example, a designer of a motor may want to generate a digital twin of the motor. In such case, the cloud computing platform 120 may enable the designer to generate a digital twin of the motor using design data associated with the motor. The digital twin of the motor is a digital representation (also known as digital replica) of the asset.

At step 404, the digital twin of the asset is validated using a set of validation rules (e.g., rules based on physical behavioral model, kinematics characteristics, automated workflows, etc.). It is determined whether the digital twin is validated successfully. If the digital twin is not validated successfully, then a notification is sent to the designer. Following which, the designer may modify the digital twin to address the issues encountered during validation. At step 406, a unique signature associated with the digital twin is generated upon successful validation of the digital twin of the asset. The unique signature may include unique ID of asset, unique ID of digital twin, unique ID of the designer, etc.

At step 408, the digital twin of the asset is stored in the digital twin database 124. In some embodiments, the digital twin of the asset in stored in a blockchain format in the digital twin database 124. This ensures secure access to the digital twin of the asset. At step 410, the validated digital twin of the asset is provisioned to a tenant of the cloud computing system 102. For example, the tenant may be original machine builder. The tenant may send a request access to validated digital twin of the motor to the cloud computing system 102. Accordingly, the tenant is authenticated using tenant credentials and valid access token. Upon successful authentication, the digital twin of motor is provisioned to the tenant. Accordingly, the tenant may use the digital twin to simulate manufacturing process of the motor in a plant if the tenant is manufacturer of motor on the cloud computing system 102. Similarly, if the tenant is engineering company, the tenant may use the digital twin of the asset to simulate commissioning of the motor in the plant on the cloud computing system 102.

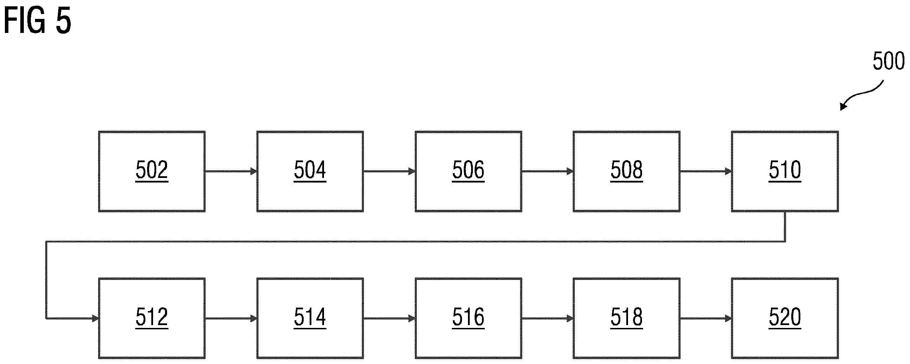

FIG 5 illustrates a process flowchart 500 of an exemplary method of simulating an asset 108A based on the digital twin of the asset 108A, according to an embodiment of the present invention. At step 502, a request to detect anomalies associated with the asset 108A is received from a user device 114. For example, the request to detect anomalies associated with the asset 108A comprises a unique identifier associated with the asset 108A. The anomalies may be associated with design of the asset 108A, engineering of the asset 108A, manufacturing of the asset 108A, commissioning of the asset 108A, operation of the asset 108A, performance of the asset 108A, maintenance of the asset 108A, etc.

At step 504, a digital twin associated with the asset 108A is retrieved from the digital twin database 124 based on the unique identifier associated with the asset 108A. At step 506, the digital twin of the asset is configured using real-time data of the asset 108A. At step 508, a simulation model associated with the asset 108A is obtained from the digital twin database 124 using the unique identifier associated with the asset 108A. If the simulation model does not exist, a simulation model for simulating the asset 108A is generated using user inputs.

At step 510, a simulation instance associated with the asset 108A is created using the configured digital twin of the asset 108A and the simulation model associated with the asset 108A. At step 512, the simulation instance associated with asset 108A is executed on the cloud computing system 102. The execution of the simulation instance associated with the asset 108A may cause simulation of the asset 108A. In one embodiment, design associated the asset 108A is simulated by executing the simulation instance on the cloud computing system 102. In another embodiment, engineering process associated with the asset 108A is simulated by executing the simulation instance on the cloud computing system 102. In yet another embodiment, manufacturing process associated with the asset 108A is simulated by executing the simulation instance on the cloud computing system 102. In further another embodiment, commissioning associated with the asset 108A is simulated by executing the simulation instance on the cloud computing system 102.

In still another embodiment, operation of the asset 108A is simulated by executing the simulation instance on the cloud computing system 102. In yet another embodiment, maintenance of the asset 108A is simulated by executing the simulation instance on the cloud computing system 102. In this manner, the tenant can simulate different simulation instances based on the digital twin of the asset 108A at different stages of asset lifecycle using the cloud computing system 102.

At step 514, simulation results associated with the asset are generated. At step 516, the simulation results associated with the asset 108A are analyzed. At step 518, anomalies associated with the asset 108A are determined based on the analysis of the simulation results. At step 520, one or more recommendations to resolve the anomalies associated with the asset 108A are generated. The recommendations may indicate the operation to be performed to prevent the anomalies from occurring during real-time operation.

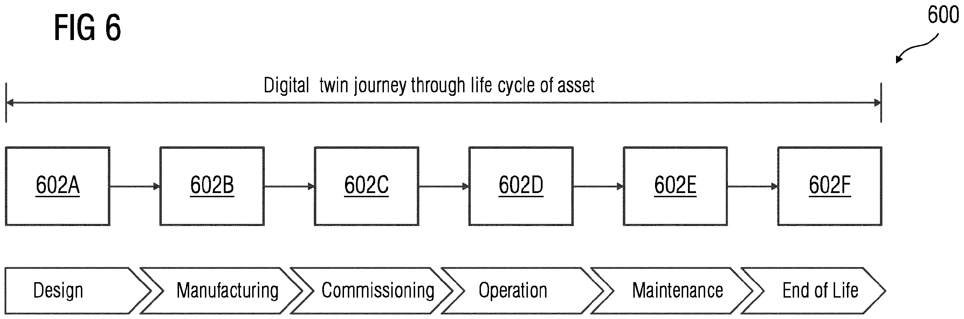

FIG 6 is a schematic representation 600 depicting journey of a digital twin throughout lifecycle of an asset. FIG 6 shows a digital twin 602A at design stage of an asset (e.g., a motor), a digital twin 602B at manufacturing stage of the asset, a digital twin 602C at commissioning stage of the asset, a digital twin 602D at operation stage of the asset, a digital twin 602E at maintenance stage of the asset, and a digital twin 602F after end of life of the asset. It can be seen that digital twin of the asset goes through different lifecycle stages of the asset. The cloud computing system 102 enables tenants (e.g., designer, original equipment manufacturer, plant operator, field engineer, etc.) to manage the journey of the digital twin through different lifecycle stages of the asset. Also, the cloud computing system 102 periodically updates the digital twins to make it suitable for next lifecycle stage of the asset. The cloud computing system 102 enables tenants to manage the digital twin through its own lifecycle (e.g., generation, validation, provisioning, configuring, etc.).

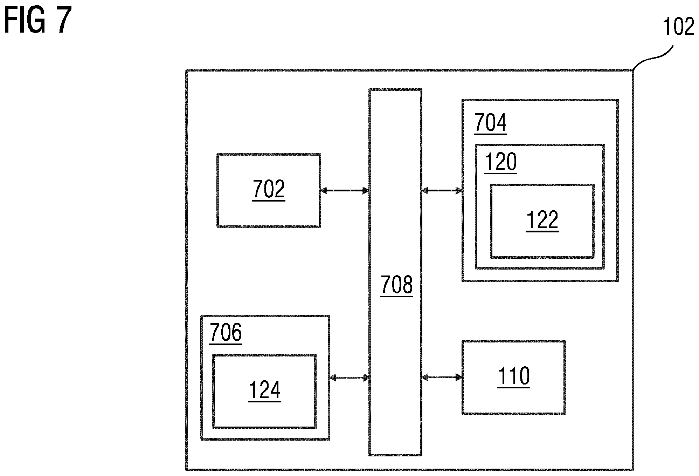

FIG 7 is a schematic representation of the cloud computing system 102 such as those shown in FIG 1, according to an embodiment of the present invention. The cloud computing system 102 comprises processing units 702, a memory unit 704, a storage unit 706, a communication interface 708, and the cloud interface 110.

The processing units 702 may be one or more processor (e.g., servers). The processing units 702 are capable of executing machine-readable instructions stored on a computer-readable storage medium such as the memory unit 704 for performing one or more functionalities described in the foregoing description including but not limited to providing digital twins related to cloud services to authorized tenants, and managing digital twins during its lifecycle. The memory unit 704 comprises the cloud computing platform 120 stored in the form of machine-readable instructions and executable by the processing units 702. Alternatively, the cloud computing platform 120 may take a form of hardware such as a processor with embedded software. The cloud computing platform 120 comprises the digital twin management module 122 stored in the form of machine-readable instructions executable by the processing units 702.

The storage unit 706 can be volatile or non-volatile storage. In the preferred embodiment, the storage unit 706 comprises the digital twin database 124 for storing digital twins of assets, simulation models, real-time data of assets, and simulation results. The communication interface 708 acts as interconnect means between different components of the cloud computing system 102. The communication interface 708 may enable communication between the processing units 702, the memory unit 704 and the storage units 706. The processing units 702, the memory unit 704 and the storage unit 706 may be located in same location or at different locations remote from the industrial plants 106A-N.

The cloud interface 116 is configured to establish and maintain communication links with the industrial plants 106A-N. Also, the cloud interface 116 is configured to maintain a communication channel between the cloud computing system 102 and the user devices 114.

Those of ordinary skilled in the art will appreciate that the hardware depicted in FIG 8 may vary for specific implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

Further Embodiments:
1. A method of managing digital twins of assets using a cloud computing system, comprising:
   generating, using a cloud computing system, a digital twin associated with an asset based on a set of data values associated with the asset, wherein the digital twin is a real-time digital representation of the asset;
   validating, using the cloud computing system, the digital twin associated with the asset based on a set of validation rules;
   provisioning, using the cloud computing system, the validated digital twin of the asset to a tenant of the cloud computing system.
2. The method according to embodiment 1, further comprising:
   generating a unique signature associated with the digital twin upon successful validation of the digital twin of the asset.
3. The method according to embodiment 1, further comprising:
   storing the digital twin of the asset in a digital twin database in a blockchain format.
4. The method according to embodiment 3, further comprising:
   retrieving at least one digital twin of the asset from the digital twin database; and
   configuring the digital twin of the asset using real-time data associated with the asset.
5. The method according to embodiment 1, further comprising:
   generating a simulation model associated with the asset.
6. The method according to embodiments 1 or 5, further comprising:
   creating a simulation instance associated with the asset using the simulation model associated with the asset and the configured digital twin of the asset.
7. The method according to embodiment 6, further comprising:
   simulating designing of the asset by executing the simulation instance associated with the asset.
8. The method according to embodiment 6, further comprising:
   simulating engineering of the asset by executing the simulation instance associated with the asset.
9. The method according to embodiment 6, further comprising:
   simulating commissioning of the asset in a technical installation by executing the simulation instance associated with the asset.
10. The method according to embodiment 6, further comprising:
   simulating operation of the asset by executing the simulation instance associated with the asset.
11. The method according to embodiment 6, further comprising:
   simulating maintenance operation associated with maintenance of the asset by executing the simulation instance associated with the asset.
12. The method according to embodiment 6, further comprising:
   simulating a manufacturing process associated with manufacturing of the asset by executing the simulation instance associated with the asset.
13. The method according to any of the embodiments 7 to 12, further comprising:
   generating simulation results associated with the asset.
14. The method according to embodiment 13, further comprising:
   analyzing the simulation results associated with the asset;
   determining anomalies associated with the asset based on the analysis of the simulation results; and
   generating one or more recommendations to resolve the anomalies associated with the asset.
15. The method according to any of the embodiments 1 to 14, further comprising:
   generating an assembly of digital twins associated with a plurality of assets in a technical installation using digital twins stored in the digital twin database.
16. A cloud computing system comprising:
   one or more processing units; and
   an accessible memory unit communicatively coupled to the one or more processing units, wherein the memory unit comprises a digital twin management module configured for performing method according to embodiments 1 to 14.
17. A non-transitory computer-readable storage medium having instructions stored therein, that when executed by one or more processing units, cause the one or more processing units to perform method according to embodiments 1 to 14.

## Claims

1. A method of managing digital twins of assets using a cloud computing system, comprising:
generating, using a cloud computing system, a digital twin associated with an asset based on a set of data values associated with the asset, wherein the digital twin is a real-time digital representation of the asset;
validating, using the cloud computing system, the digital twin associated with the asset based on a set of validation rules;
provisioning, using the cloud computing system, the validated digital twin of the asset to a tenant of the cloud computing system.

2. The method according to claim 1, further comprising:
generating a unique signature associated with the digital twin upon successful validation of the digital twin of the asset.

3. The method according to claim 1, further comprising:
storing the digital twin of the asset in a digital twin database in a blockchain format.

4. The method according to claim 3, further comprising:
retrieving at least one digital twin of the asset from the digital twin database; and
configuring the digital twin of the asset using real-time data associated with the asset.

5. The method according to claim 1, further comprising:
generating a simulation model associated with the asset.

6. The method according to claims 1 or 5, further comprising:
creating a simulation instance associated with the asset using the simulation model associated with the asset and the configured digital twin of the asset.

7. The method according to claim 6, further comprising:
simulating designing of the asset by executing the simulation instance associated with the asset.

8. The method according to claim 6, further comprising:
simulating engineering of the asset by executing the simulation instance associated with the asset.

9. The method according to claim 6, further comprising:
simulating commissioning of the asset in a technical installation by executing the simulation instance associated with the asset, or
simulating operation of the asset by executing the simulation instance associated with the asset.

10. The method according to claim 6, further comprising:
simulating maintenance operation associated with maintenance of the asset by executing the simulation instance associated with the asset, or
simulating a manufacturing process associated with manufacturing of the asset by executing the simulation instance associated with the asset.

11. The method according to any of the claims 7 to 10, further comprising:
generating simulation results associated with the asset.

12. The method according to claim 11, further comprising:
analyzing the simulation results associated with the asset;
determining anomalies associated with the asset based on the analysis of the simulation results; and
generating one or more recommendations to resolve the anomalies associated with the asset.

13. The method according to any of the claims 1 to 12, further comprising:
generating an assembly of digital twins associated with a plurality of assets in a technical installation using digital twins stored in the digital twin database.

14. A cloud computing system comprising:
one or more processing units; and
an accessible memory unit communicatively coupled to the one or more processing units, wherein the memory unit comprises a digital twin management module configured for performing method according to claims 1 to 12.

15. A non-transitory computer-readable storage medium having instructions stored therein, that when executed by one or more processing units, cause the one or more processing units to perform method according to claims 1 to 12.
